# EUROPEAN PATENT SPECIFICATION

(11) **EP 1 840 347 B1**
(45) Date of publication and mention of the grant of the patent: **22.07.2009**
(21) Application number: 07250570.4
(22) Date of filing: 13.02.2007
(51) Int. Cl.: F01N 3/022

(54) **Honeycomb structure**
Wabenstruktur
Structure en nid d'abeille

(30) Priority: 29.03.2006 JP 2006090707
(43) Date of publication of application: 03.10.2007
(73) Proprietor: NGK INSULATORS, LTD., Nagoya-City, Aichi Pref. 467-8530 (JP)
(72) Inventor: Mizutani, Takashi, Nagoya City, Aichi-ken, 467-8530 (JP)
(74) Representative: Paget, Hugh Charles Edward

(56) References cited:
- EP-A1- 0 480 396
- EP-A1- 1 440 722
- EP-A1- 1 479 881

## Description

### Background of the Invention and Related Art Statement

The present invention relates to a honeycomb structure. In particular, the present invention relates to a honeycomb structure which is excellent in thermal dispersibility upon heating and where damage due to thermal stress is effectively prevented as well as being capable of exhibiting a special function by a segment to which properties (specificity) different from those of general segments are imparted.

Necessity of removing particulate matter and harmful substances in exhaust gas discharged from an internal combustion engine, a boiler, or the like has been rising in consideration of the influence on the environment. Particularly, regulation relating to removal of particulate matter (hereinbelow sometimes referred to as "PM") discharged from a diesel engine tends to be strengthened in both Western countries and Japan, and attention is riveted to the use of a honeycomb structure as a trapping filter (hereinbelow sometimes referred to as a "DPF") for removing PM.

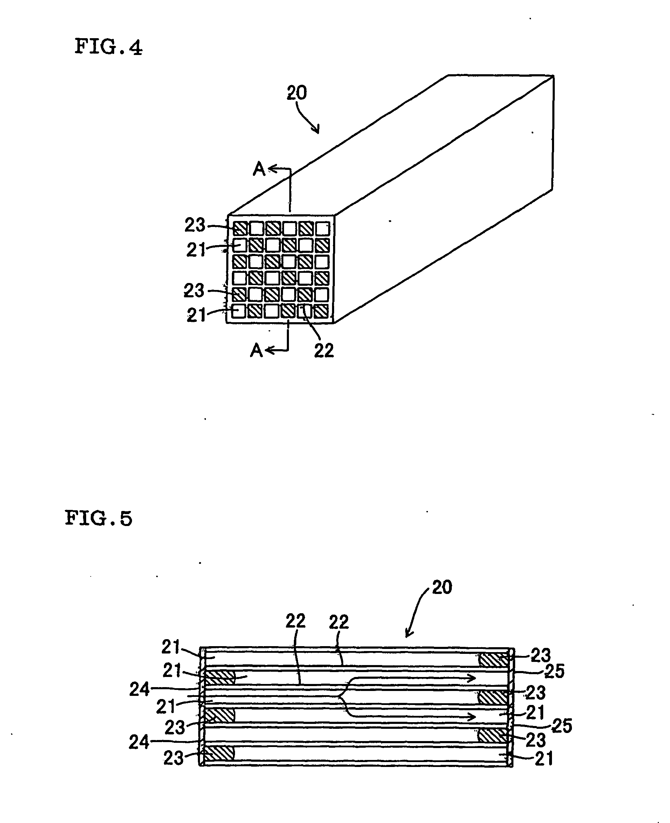

Generally, as shown in Figs. 4 and 5, a honeycomb structure 20 is provided with porous partition walls 2 having a large number of pores and disposed so as to form a plurality of cells 21 functioning as exhaust gas flow passages between two end faces and plugged portions 23 disposed so as to alternately plug either one of the opening end portions of the cells 21 on the two end faces. In the thus constituted honeycomb structure 20, fluid such as gas, liquid, or the like, flows into the cells 21 from inlet side opening end portions 24 which are open without being plugged with the plugged portions 23, passes through the porous partition walls 22, and is discharged from the adjacent cells 21 (plugged in the inlet side opening end portions 24 and open in the outlet side opening end portions 25) . At this time, the partition walls 22 substantially function as a filter. For example, carbon particulate matter or the like discharged from a diesel engine accumulates on the partition walls 22. Such a honeycomb structure 20 has problems such as having a crack because of uneven temperature distribution in the honeycomb structure 20 due to rapid temperature change of exhaust gas or local heat generation. In particular, in the case that a honeycomb structure is used as a DPF, it is necessary to remove the accumulating carbon particulate matter by combustion for regeneration. Since local high temperature is inevitable at this time, and high thermal stress generates, which easily causes damage.

Therefore, there are disclosed a method for joining segments obtained by dividing a honeycomb structure into a plurality of pieces with a bonding material (e.g., see Patent Literature 1 ) and a honeycomb structure having a passage separator formed therein (e.g., see Patent Literature 2).
[Patent Literature 1] JP-B-61-51240
[Patent Literature 2] JP-A-2003-161136

The method disclosed in Patent Literature 1 suppresses local temperature rise by unitarily joining the segments, which is as effective as exactly what it has. However, in the case of using a segment having properties (specificity) different from those of general segments in order to allow a special function to be exhibited, there arises a problem of causing damage due to thermal stress because temperature of the segment rises upon regeneration. That is, because of having properties of "high opening ratio or high porosity" imparted for reducing ventilation resistance, "large volume" imparted for reducing the number of manufacturing steps and the production costs, and "low thermal conductivity" imparted for enhancing moisture retention and reducing soot remaining without burning upon regeneration, indirectly enabling the use of low thermal expansion ceramic; temperature of the segment rapidly rises upon regeneration to have an inconvenience of causing damage due to thermal stress. Thus, it was not always a sufficiently satisfactory method. In addition, also in the honeycomb structure disclosed in Patent Literature 2, effect of preventing damage due to thermal stress is not always sufficiently satisfactory, and, inparticular, therearisesaproblem of having a case incapable of effectively suppressing rise or the like of temperature and pressure loss depending on a percentage of passage separators imparted thereto.

### Summary of the Invention

The present invention has been made in view of the above problems and aims to provide a honeycomb structure which is excellent in thermal dispersibility upon heating and where damage due to thermal stress is effectively prevented as well as being capable of exhibiting a special function by a segment to which properties (specificity) different from those of general segments are imparted.

The present invention has been made to achieve the above aim, and the honeycomb structure is provided according to the present invention as set out in claim 1.

Preferably the specific segment has a higher opening ratio as a property different from the general segments.

Alternatively the specific segment preferably has a higher porosity as a property different from the general segments.

Preferably the specific segment has a larger volume (cross-section taken along a plane perpendicular to the central axis) as a property different from the general segments.

Preferably the specific segment has a lower thermal conductivity as a property different from the general segments.

Preferably a material for the partition walls of the general segments is of cordierite, and the specific segment has a material of the partition walls of silicon carbide (SiC) as a property different from the general segments.

Preferably the whole structure is formed in which the specific segments are assembled so as to locate in a portion having the highest temperature when the specific segments are heated by the exhaust gas.

Preferably cross-sectional shapes taken along a plane perpendicular to the central axis of the additional plugged portions are mutually successive to form predetermined a series of shape.

According to the present invention, there is provided a honeycomb structure which is excellent in thermal dispersibility upon heating and where damage due to thermal stress is effectively prevented as well as being capable of exhibiting a special function by a segment to which properties (specificity) different from those of general segments are imparted.

### Brief Description of the Drawings

Fig. 1 is a plan view schematically showing an end face of an embodiment of a honeycomb structure of the present invention.

Fig. 2 is an enlarged plan view showing a part of an end face of a honeycomb structure shown in Fig. 1.

Fig. 3 is a plan view schematically showing another embodiment of a honeycomb structure of the present invention.

Fig. 4 is a perspective view schematically showing an example of a honeycomb structure.

Fig. 5 is a cross-sectional view schematically showing an example of a conventional honeycomb structure.

Fig. 6 is a graph showing DPF maximum temperature and regeneration efficiency in each of the Examples and Comparative Examples.

### Detailed Description of the Invention

Embodiments of the present invention will hereinbelow be described, referring to drawings.

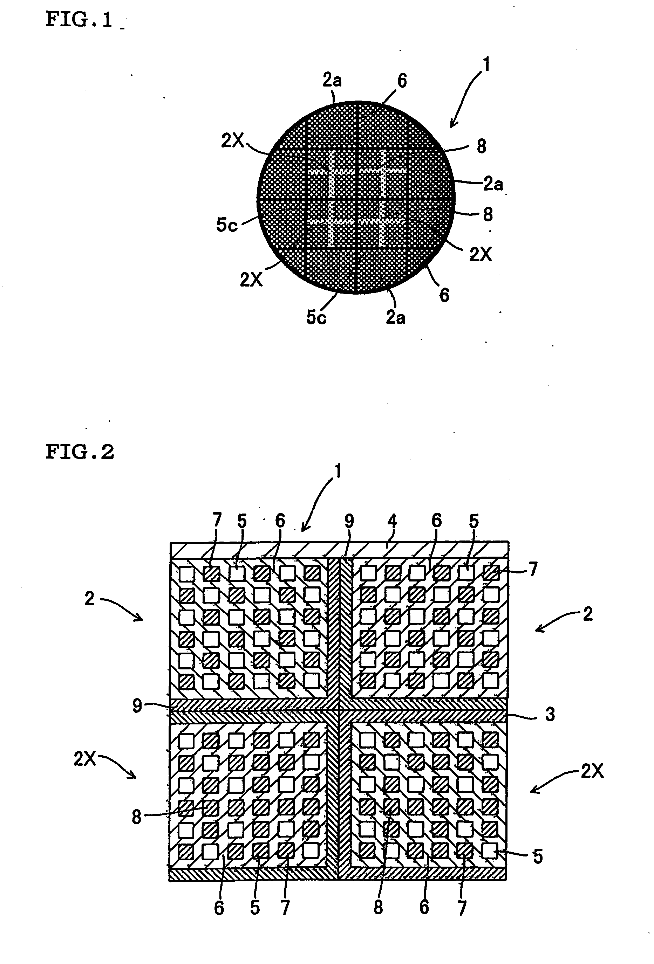

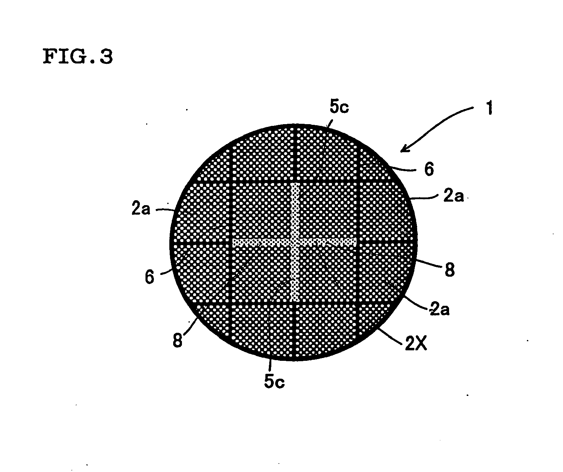

Fig. 1 is a plan view schematically showing an end face of an embodiment of a honeycomb structure of the present invention, Fig. 2 is an enlarged plan view showing a part of an end face of a honeycomb structure shown in Fig. 1, and Fig. 3 is a plan view schematically showing another embodiment of a honeycomb structure of the present invention. As shown in Figs. 1 to 3, a honeycomb structure 1 of the present embodiment is provided with porous partition walls 6 having a large number of pores and disposed so as to form a plurality of cells 5 functioning as exhaust gas flow passages between two end faces, and plugged portions 7 disposed so as to alternately plug one of the opening end portions of each of the cells 5 on the two end faces . The honeycomb structure 1 has a constitution in which honeycomb segments 2 having a shape of a part of the whole structure separated into two or more in a plane parallel to the central axis are joined to form the whole structure, and fluid flowing into the cells 5 can be discharged via the partition walls 6 functioning as a filter layer. The honeycomb structure 1 is characterized in that the honeycomb segments 2 includes a specific segment 2X having properties different from those of general segments 2a in at least a part of the honeycomb segments 2 and that additional plugged portions 8 are disposed in the opening end portions (unplugged opening end portions) having no plugged portion 7 being disposed of the plurality of cells 5 of the specific segment 2X so as to suppress flowing of at least a part of the exhaust gas into the unplugged opening end portions. The plugged pattern may be formed by disposing plugged portion 7 so as to be interposed between the additional plugged portions 8.

Here, regarding the additional plugged portions 8, "disposed so as to suppress the flowing of at least a part of the exhaust gas into the unplugged opening end portions" means not only "disposed so as to allow a part of the exhaust gas to flow in though the flowing-in of another part of the exhaust gas is suppressed", but also "including the case of being disposed so as to completely suppress (plug) the flowing-in of the exhaust gas". To be specific, in the case of the former, it means a structure having a plugged portion having a round or doughnut shape or a square shape with a hole in the center thereof with respect to a square cell. In the case of the latter, it means a structure having a completely plugged portion like the general plugging. In addition, though the additional plugged portions 8 are disposed on at least one of the two end faces, it is preferable that the additional plugged portions 8 are disposed on both the end faces.

Thus, in a honeycomb structure 1 of the present embodiment, the additional plugged portions 8 are provided in the cell 5 portions of a specific segment 2X where temperature particularly rapidly rises as described above. By providing the additional plugged portions 8 in such a specific segment where temperature rapidly rises, there are formed cells (hereinbelow sometimes referred to as "plugged cells 5c") plugged in both the opening end portion on one end face side, e.g., inlet side opening end portion and the opening end portion on the other end face side, e.g., outlet side opening end portion. By the plugged cells 5c, thermal dispersibility of this portion upon heating can be improved to effectively prevent damage due to thermal stress. Conventionally, when the honeycomb structure 1 is used as a DPF and regeneration of a DPF is conducted by combusting carbon particulate matter or the like trapped by the partition walls 6, the specific segment 2X sometimes has damage or melting due to rapid temperature rise in the case that an amount of trapped carbon particulate matter is large because combustion heat upon regeneration tends to concentrate on the cell 5 portions of the specific segment 2X. An amount of carbon particulate matter accumulating on the partition walls 6 in the cells 5 of the specific segment 2X having the additional plugged portions 8 therein can be reduced, and the amount of heat generation upon regeneration can be reduced. Further, since carbon particulate matter or the like is not trapped in the plugged cells 5c, combustion heat is not generated upon regeneration, and temperature there is lower than that in the other portions, where combustion is actually caused. Therefore, the plugged cells 5c absorb combustion heat generated in the other portions, thereby contributing to thermal dispersion and suppressing rapid combustion. In addition, numerial references 4 and 9 denote an outer peripheral coat layer and a honeycomb segment 2, respectively.

The specific segment 2X used in the present embodiment will hereinbelow be described concretely.

In a honeycomb structure 1 of the present embodiment, it is preferable that the specific segment 2X has a higher opening ratio as a property different from the general segments 2a. By such a constitution, reduction in ventilation resistance and pressure loss can be attempted.

In addition, in a honeycomb structure 1 of the present embodiment, it is preferable that the specific segment 2X has a higher porosity as a property different from the general segments 2a. By such a constitution, reduction in ventilation resistance and pressure loss can be attempted.

In addition, in a honeycomb structure 1 of the present embodiment, it is preferable that the specific segment 2X has a larger volume (area of the cross-section taken along a plane perpendicular to the central axis) as a property different from the general segments 2a. By such a constitution, reduction in the number of manufacturing steps and production costs can be attempted.

In addition, in a honeycomb structure 1 of the present embodiment, it is preferable that the specific segment 2X has a lower thermal conductivity as a property different from the general segments 2a. By such a constitution, moisture retention is enhanced, and reduction in soot remaining without burning upon regeneration can be attempted. Indirectly, it enables use of ceramic having low thermal expansion.

In addition, in a honeycomb structure 1 of the present embodiment, it is preferable that, in the case that a material for the partition walls 6 of the general segments 2a is of cordierite, the specific segment 2X has a material of the partition walls of silicon carbide (SiC) as a property different from the general segments 2a. By such a constitution, an optimum material can be disposed in each of the outer peripheral portion, where temperature hardly rises by the influence of the open air, and the central portion, which is more susceptible to the amount of heat of exhaust gas.

In addition, in a honeycomb structure 1 of the present embodiment, it is preferable that the whole structure includes the specific segments 2X assembled so as to locate in a portion having the highest temperature when the specific segments 2X are heated by the exhaust gas. Specifically, there is a case that a flow rate distribution is nonuniform depending on a piping (cone) in front and at the back of the honeycomb structure (DPF) 1, and, in such a case, a specific segment is selectively disposed in a portion which has a high flow rate, i.e., is more susceptible to the amount of heat of exhaust gas. By such a constitution, damage by thermal stress can effectively be prevented.

In addition, in a honeycomb structure 1 of the present embodiment, it is preferable that the whole structure includes the specific segments 2X assembled so as to locate in a central portion including the central axis. Specifically, for example, four segments disposed around the central axial in the case that it is composed of 4 X 4 segments and nine segments surrounding the central segment or only one segment in the center in the case of 5 X 5 segments may be the specific segments. By such a constitution, damage by thermal stress can effectively be prevented.

Further, in a specific segment 2X of a honeycomb structure 1 of the present embodiment, it is preferable that cross-sectional shapes taken long a plane perpendicular to the central axis of the additional plugged portions 8 (plugged portion 7 may be interposed) are mutually successive to form predetermined a series of shape. Figs. 1 and 3 each show an end face in an embodiment of a honeycomb structure of the present invention as described above. As shown in Figs. 2 and 3, it is preferable that cross-sectional shapes taken long a plane perpendicular to the central axis of the additional plugged portions 8 form predetermined a series of shape without being disconnected. By such a constitution, a specific segment 2X can be divided into regions having a predetermined size by, for example, plugged cells 5c having a successive predetermined a series of shape. Therefore, heat generated upon combustion of carbon particle matter or the like can be dispersed in each of the regions, and thereby chain combustion due to heat generation is suppressed, and rapid temperature rise can effectively be prevented.
In addition, the above "a series of shape without being disconnected" includes not only the case that additional plugged portions are completely connected, but also the cases that they are successive in a portion but "isolated" from the other portion, that they are assembled in some portions but the portions are separated from one another such as the case of "being disposed at random" in a cross-section taken along a plane perpendicular to the central axis, and the like.

In addition, in a honeycomb structure 1 of the present embodiment, there is no particular limitation on a material constituting the partition walls 6, and the material is preferably containing as the main crystal at least one selected from the group consisting of cordierite, mullite, alumina, silicon carbide (SiC), silicon nitride, aluminum titanate, lithium aluminum silicate (LAS) and zirconium phosphate.

In addition, in a honeycomb structure 1 of the present embodiment, it is preferable that the additional plugged portion 8 is constituted by the same material as that of the partition walls 6. By such a constitution, since there is no difference in thermal expansion between the materials, a crack due to expansion of the plugging material can be prevented. In addition, the same can be applied to a material for the plugged portion 7.

Examples of a method for manufacturing a honeycomb structure of the present invention include the following three methods.
(1) A method in which clay is formed into honeycomb segments, the resultantly a plurality of honeycomb segments (including a peculiar segment) are joined to give a formed honeycomb body formed into a honeycomb shape, in a plugging step before a firing, holes are made by a laser in a general segment in a checkerwise pattern, and holes are made not only in a checkerwise pattern but also in cells to be additionally plugged only in the specific segments in the formed honeycomb body, plugging is performed in a general manner, and firing the formed honeycomb body.
(2) A method in which additional plugging is performed only to special segments among the segments after the firing the formed honeycomb body obtained as described above. At that time, an additional plugging material used for the additional plugging may be the same as the material for the substrate or a general material for a plugged portion. However, besides, the material may be a material which is hardened without the firing, such as cement.
(3) A method in which additional plugging is performed only in a special segment portion of a joined block body after the firing and joining the formed honeycomb body obtained as described above or after processing. The material is the same as that of (2).

In this case, it is preferable to use one having a different size of a hole corresponding to an additional plugged portion from that of a hole corresponding to a plugged portion as a mask and/or a film in that the above-mentioned honeycomb structure 1 can be manufactured simply and at low costs.

In addition, preparation of a clay, manufacturing of honeycomb segments, joining of the honeycomb segments (manufacturing of a formed honeycomb body), drying, firing, etc., except for forming of plugged portions and additional plugged portions can be performed according to a conventional method for manufacturing a honeycomb structure.

Specifically, in a general plugging step, holes corresponding to the additional plugged portions are further formed in the mask and/or the film. The size of the holes corresponding to the additional plugged portions may be smaller than the holes corresponding to the plugged portions except for the case of completely plugging like the general plugged portions. Alternatively, the holes may be made in the same manner as in the general plugged portions.

There is no particular limitation on a method for injecting each material into portions to be the plugged portions and the additional plugged portions, and an example of the method is a so-called squeezing method, in which a slurried material is put in a container to give a predetermined depth, followed by forcing the honeycomb structure having a mask and/or a film disposed thereon with one end face thereof facing downward.

Alternatively, a suction method can be employed as a method for injecting each material into the portions to serve as the plugged portions and the additional plugged portions of cells.

After forming the plugged portions and the additional plugged portions, firing is performed to obtain a honeycomb structure having the plugged portions and the additional plugged portions formed therein.

In a honeycomb structure 1 of the present invention, a catalyst having exhaust gas purification ability is carried on at least a part of the inside surfaces of the partition walls 6 and/or the inside surfaces of the pores of the partition walls 6 to be used as a honeycomb catalyst body. Examples of the catalyst includes (1) a gasoline engine exhaust gas purification three-way catalyst, (2) an oxidation catalyst for purifying gasoline engine or diesel engine exhaust gas, (3) a SCR catalyst for selectively reducing NOx, and (4) a NOx storage catalyst.

A gasoline engine exhaust gas purification three-way catalyst includes a carrier coat to coat the partition walls of a honeycomb structure (honeycomb carrier) and a noble metal dispersed and carried inside the carrier coat. The carrier coat is constituted by, for example, active alumina. Preferable examples of the noble metal dispersed and carried inside the carrier coat include Pt, Rh, Pd, and a combination thereof. Further, the carrier coat contains a compound such as cerium oxide, zirconium oxide, silica, and the like, or a mixture thereof. In addition, it is preferable that the total amount of the noble metals is within the range from 0.17 to 7.07 g per liter of volume of the honeycomb structure.

An oxidation catalyst for purifying gasoline engine or diesel engine exhaust gas contains a noble metal. As the noble metal, one or more kinds selected from the group consisting of Pt, Rh, and Pd are preferable. Incidentally, it is preferable that the total amount of the noble metals is within the range from 0.17 to 7.07 g per liter of volume of the honeycomb structure. In addition, a SCR catalyst for selectively reducing NOx contains at least one kind selected from the group consisting of a metal-substituted zeolite, vanadium, titania, tungsten oxide, silver, and alumina.

A NOx storage catalyst contains an alkali metal and/or an alkali earth metal. Examples of alkali metal include K, Na, and Li. Examples of alkali earth metal include Ca. In addition, it is preferable that the total amount of K, Na, Li, and Ca is 5g or more per liter of volume of the honeycomb structure.

The above honeycomb catalyst body can be produced by carrying a catalyst on a honeycomb structure of the present invention according to a conventionally known method. Specifically, in the first place, catalyst slurry containing a catalyst is prepared. Subsequently, the catalyst slurry is coated on a surface of the pores in the partition walls of a honeycomb structure by a method such as a suction method. Then, the honeycomb structure is subjected to drying at room temperature or under heating conditions to prepare a honeycomb structure of the present invention.

### Examples

The present invention will hereinbelow be described more concretely on the basis of Examples. However, the present invention is by no means limited to these Examples.

### (Example 1)

### (Manufacturing example of general segment)

As a honeycomb segment raw material, a SiC powder and a metal Si powder were mixed at the mass ratio of 80:20 to obtain a mixture. To the mixture were added starch and foaming resin as pore formers, methyl cellulose, hydroxypropoxylmethyl cellulose, surfactant, and water to prepare clayhavingplasticity. The clay was subjected to extrusion forming and then dried with microwaves and hot air to obtain a formed honeycomb segment body having a partition wall thickness of 310 µm, a cell density of about 46.5 cells/cm² (300 cells/inch²) , a square cross-section having a side of 35 mm, and a length of 152 mm.

Next, a photograph of an end face of the above formed honeycomb segment body was taken, and image processing on the image was performed to confirm the positions of the whole cell at the end face. Then, a sheet having almost the same shape as that of the above honeycomb segment was prepared, and it was applied to the whole face where the cells were recognized. Then, datum set for every standard of the outer diameter, the cell pitch, and the like, of the formed honeycomb segment body were calculated on the basis of cell portions previously recognized by the image processing, and positioning was performed on the XYZθ stage on which the formed honeycomb segment body was put. Holes were made in the cell positions to be made open of the sheet by a laser processing, and the sheet served as a mask. Then, the end face having the mask applied thereon of the formed honeycomb segment body was immersed in filler, and a predetermined amount of the plugging material was press-inserted and filled in cells from the holes made in the sheet. Then, the mask was peeled off to complete plugging on the end face. Then plugging was performed on the other end face in the same manner. In addition, a material similar to that for a honeycomb segment raw material was used as the filler. Finally, the plugged portions on both the end faces of the cells were dried and then degreased at about 400°C in an ambient atmosphere, and then fired at about 1450°C in the Ar inert atmosphere to bond SiC crystal particles by Si to obtain a honeycomb segment having a porous structure.

### (Example 1-1)

Four segments each having a cell structure of 200 µm (8 mil) and 46.5 cells/cm² (300 cpsi) were disposed in the center, and 12 segments having a cell structure of 300 µm (12 mil) and 46.5 cells/cm² (300 cpsi) constituted the outer periphery. At this time, additional plugging was performed only to the cells of 200 µm (10 mil) and 46.5 cells/cm² (300 cpsi) in the center.

### (Example 1-2)

Four segments each having a cell structure of 200 um (8 mil) and 31 cells/cm² (200 cpsi) were disposed in the center, and 12 segments having a cell structure of 300 µm (12 mil) and 46.5 cells/cm² (300 cpsi) constituted the outer periphery. At this time, additional plugging was performed only to the cells of 200 µm (8 mil) and 31 cells/cm² (200 cpsi) in the center.

### (Example 2)

Four segments each having a porosity of 60% were disposed in the center, and 12 segments in the outer periphery had a porosity of 50%. Additional plugging was performed only to the central segments having a porosity of 60%. In addition, raising a porosity (50% to 60%) was performed by increasing the amount of the pore former.

### (Example 3)

A square segment having a size of 72 X 72 mm constituted the center. Twelve square segments having a size of 36 X 36 mm constituted the outer periphery. At that time, additional plugging was performed only to the segment having a size of 72 X 72 mm.

### (Example 4)

The segment size was 36 X 36 mm for all the segments. Four segments constituting the center employed cordierite as the substrate material. Twelve segments in the outer periphery were constituted by SiC. Additional plugging was performed only to the cordierite segments.

### (Comparative Example 1)

A general DPF without additional plugging was used.

### (Comparative Example 2)

A general DPF with additional plugging was used.

### (Regeneration test)

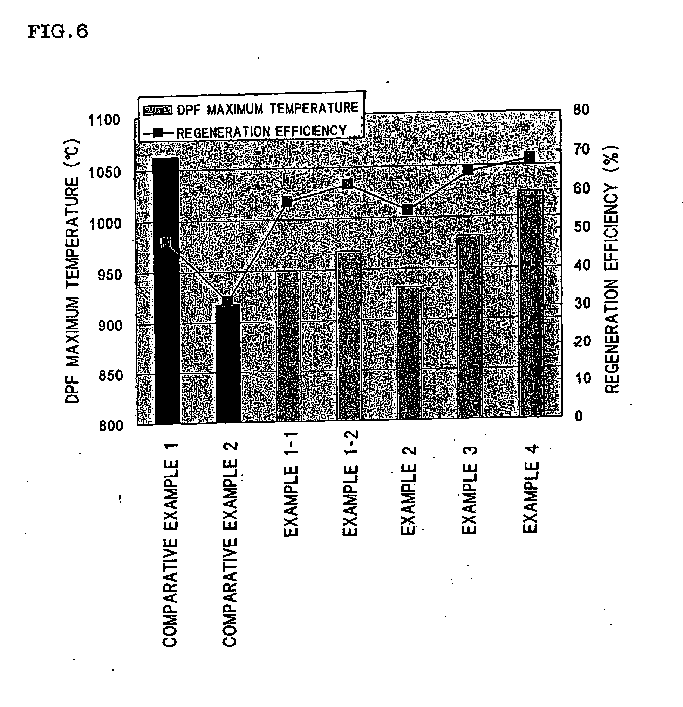

A honeycomb structure (DPF: diameter of 144 mm, length of 152 mm) obtained in the above was mounted on a diesel engine having displacement of 2.0 L, and a regeneration test was performed at a soot accumulation amount of 10 g/L. Exhaust gas temperature at the inlet of the honeycomb structure was raised of by post injection under the condition of engine rotational speed of 2000 rpm X engine torque of 50 Nm for regeneration. When soot regeneration was finished and the post injection was finished at the time that pressure loss in front and at the back of the honeycomb structure began to rise to shift the condition to idling, inside temperature of the honeycomb structure sharply rose because of high oxygen concentration and low flow rate. The inside temperature (temperature distribution in the radius direction at the position of 15 mm upstream from the downstream end face) of the honeycomb structure at that time was measured (The means for the measurement will be described later). Also, regeneration efficiency (amount of regenerated soot with respect to the initial amount of soot) was evaluated. The maximum temperature (°C) inside the honeycomb structure and regeneration efficiency are shown in Table 1 and Fig. 6.

### [Maximum temperature upon regeneration]

A thermocouple was disposed in each portion of the honeycomb structure so that a profile of inside temperature of the honeycomb structure upon PM regeneration could be monitored. By recording the maximum temperature upon regeneration, inside temperature in each portion of the honeycomb structure upon regeneration was measured. The highest temperature among the temperature measured was defined as the maximum temperature upon regeneration.

**[Table 1]**

| No. | DPF properties | Maximum Temperature | Regeneration Efficiency |
|---|---|---|---|
| | | [°C] | [%] |
| Comp. Ex. 1 | Square 36 × 36 mm segment, 4 × 4=16 segments are used, the whole segments have a porosity of 50% and a cell structure of 12 mil / 300 cpsi, no dummy segment | 1062 | 48 |
| Comp. Ex. 2 | Square 36 × 36 mm segment, 4 × 4=16 segments are used, the whole segments have a porosity of 50% and a cell structure of 12 mil / 300 epsi, 4 dummy segments constitute the center | 918 | 32 |
| Example 1-1 | Square 36 × 36 mm segment, 4 × 4=16 segments are used, central segments have a porosity of 50% and a cell structure of 8 mail / 300 cpsi, outer peripheral segments have a porosity of 50% and a cell structure of 12 mil / 300 cpsi, 4 dummy segments constitute the center | 950 | 58 |
| Example 1-2 | Square 36 × 36 mm segment, 4 × 4=16 segments are used, central segments have a porosity of 50% and a cell structure of 8 mil / 200 cpsi, 12 outer peripheral segments have a porosity of 50% and a cell structure of 12 mil / 300 cpsi, 4 dummy segments constitute the center | 968 | 62 |
| Example 2 | Square 36 × 36 mm segment, 4 × 4=16 segments are used, central segments have a porosity of 60% and a cell structure of 12 mil / 300 cpsi, 12 outer peripheral segments have a porosity of 50% and a cell structure of 12 mil / 300 cpsi, 4 dummy segments constitute the center | 932 | 55 |
| Example 3 | The center is constituted by a square 72 × 72 mm segment, the outer periphery was constituted by 12 square 36 × 36 mm segments, the whole segments have a porosity of 50 % and a cell structure of 12 mill / 3000 cpsi, a dummy segment is used as the central 72 × 72 mm segment | 981 | 65 |
| Example 4 | Square 36 × 36 mm segment, 4×4=16 segments are used, central segments are of cordierite and have a porosity of 50% and a cell structure of 12 mil / 300 cpsi, outer peripheral segments are of SiC and have a porosity of 50% and a cell structure of 12 mill / 300 cpsi, 4 dummy segments constitute the center | 1024 | 68 |

### Industrial Applicability

A honeycomb structure of the present invention is effectively used as a diesel particulate filter (DPF) for trapping and removing particulate matter (particulate) contained in exhaust gas from a diesel engine or the like in various industrial fields where an internal combustion engine, a boiler, or the like, is used, for example, an automobile industry, where particulate matter and harmful substances in exhaust gas serve as problems.

## Claims

1. A honeycomb structure 1 comprising:
porous partition walls 6 having a large number of pores and disposed so as to form a plurality of cells 5 functioning as exhaust gas flow passages between two end faces, and
first plugged portions 7 disposed so as to alternately plug either one of the opening end portions of the cells 5 on the two end faces,
and having a constitution in which separately formed honeycomb segments 2 having a shape of a part of the whole structure separated into two or more in a plane parallel to a central axis are joined by joining material (9) to form the whole structure;
wherein the honeycomb segments 2 includes at least one specific segment 2X having properties different from those of general segments other than the specific segment or segments, and
wherein additional, second plugged portions 8 are disposed in the opening end portions having no said first plugged portion 7 of a plurality of cells of the specific segment to form cells 5C plugged in both the opening end portion on one end face side and the opening end portion on the other end face side, so as to suppress flowing of at least a part of the exhaust gas into these cells,
and wherein the whole structure is formed in which the specific segment segments 2X are assembled so as to locate in a central portion including the central axis.

2. A honeycomb structure according to Claim 1, wherein the specific segment 2X has a higher opening ratio as a property different from the general segments 2.

3. A honeycomb structure according to Claim 1, wherein the specific segment 2X has a higher porosity as a property different from the general segments 2.

4. A honeycomb structure according to Claim 1, wherein the specific segment 2X has a larger volume (cross-section area taken along a plane perpendicular to the central axis) as a property different from the general segments 2.

5. A honeycomb structure according to Claim 1, wherein the specific segment 2X has a lower thermal conductivity as a property different from the general segments 2.

6. A honeycomb structure according to Claim 1, wherein a material for the partition walls 6 of the general segments 2 is of cordierite, and wherein the specific segment 2X has a material of the partition walls of silicon carbide (SiC) as a property different from the general segments.

7. A honeycomb structure according to any of Claims 1 to 6,
wherein the whole structure is formed in which the specific segments 2X are assembled so as to locate in a portion having the highest temperature when the specific segments are heated by the exhaust gas.

8. A honeycomb structure according to any one of Claims 1 to 7, wherein cross-sectional shapes taken along a plane perpendicular to the central axis of the additional plugged portions are mutually successive to form predetermined a series of shape.

## Patentansprüche

1. Wabenstruktur (1), umfassend:
poröse Trennwände (6), die eine große Anzahl an Poren aufweisen und so angeordnet sind, dass sie eine Vielzahl an Zellen (5) bilden, die als Abgasstromdurchlässe zwischen zwei Stirnflächen wirken, und
erste verschlossene Abschnitte (7), die so angeordnet sind, dass sie abwechselnd einen der beiden Stirnabschnitte der Zellen (5) an den beiden Stirnflächen verschließen,
wobei die Wabenstruktur einen Aufbau aufweist, in dem einzeln ausgebildete Wabensegmente (2), die die Form eines Teils der in einer parallel zu einer Mittelachse verlaufenden Ebene in zwei oder mehrere Teile geteilten Gesamtstruktur aufweisen, durch ein Verbindungsmaterial (9) zur Ausbildung der Gesamtstruktur verbunden sind;
wobei die Wabensegmente (2) zumindest ein spezifisches Segment(2X) umfassen, das andere Eigenschaften aufweist als jene der allgemeinen Segmente, die nicht das spezifische Segment/die spezifischen Segmente darstellen, und
wobei zusätzliche zweite verschlossene Abschnitte (8) in den Öffnungsstirnabschnitten ohne ersten verschlossenen Abschnitt (7) der Vielzahl an Zellen des spezifischen Segments angeordnet sind, um Zellen (5C) zu bilden, die sowohl an den Öffnungsstirnabschnitten an der einen Stirnflächenseite als auch an den Öffnungsstirnflächen an der anderen Stirnflächenseite verschlossen sind, um zumindest einen Teil des Abgases daran zu hindern, in diese Zellen zu strömen,
und wobei die Gesamtstruktur so ausgebildet ist, dass die spezifischen Segmente (2X) so angeordnet sind, dass sie sich in einem zentralen Abschnitt befinden, der die Mittelachse umfasst.

2. Wabenstruktur nach Anspruch 1, worin das spezifische Segment (2X) als eine Eigenschaft, die sich von den allgemeinen Segmenten (2) unterscheidet, einen höheren Anteil an Öffnungen aufweist.

3. Wabenstruktur nach Anspruch 1, worin das spezifische Segment (2X) als eine Eigenschaft, die sich von den allgemeinen Segmenten (2) unterscheidet, eine höhere Porosität aufweist.

4. Wabenstruktur nach Anspruch 1, worin das spezifische Segment (2X) als eine Eigenschaft, die sich von den allgemeinen Segmenten (2) unterscheidet, ein größeres Volumen (Querschnittsfläche entlang einer im rechten Winkel auf die Mittelachse verlaufenden Ebene) aufweist.

5. Wabenstruktur nach Anspruch 1, worin das spezifische Segment (2X) als eine Eigenschaft, die sich von den allgemeinen Segmenten (2) unterscheidet, eine geringere Wärmeleitfähigkeit aufweist.

6. Wabenstruktur nach Anspruch 1, worin das spezifische Segment (2X) als eine Eigenschaft, die sich von den allgemeinen Segmenten (2) unterscheidet, Siliciumcarbid (SiC) als Material für die Trennwände aufweist, während das Material für die Trennwände (6) der allgemeinen Segmente (2) Cordierit ist.

7. Wabenstruktur nach einem der Ansprüche 1 bis 6, worin die Gesamtstruktur ausgebildet ist, in der die spezifischen Segmente (2X) so angeordnet sind, dass sie sich in einem Abschnitt befinden, der die höchste Temperatur aufweist, wenn die spezifischen Segmente durch das Abgas erhitzt werden.

8. Wabenstruktur nach einem der Ansprüche 1 bis 7, worin die Formen von entlang einer im rechten Winkel auf die Mittelachse der zusätzlichen verschlossenen Abschnitte verlaufenden Ebene vorgenommenen Querschnitten aufeinander folgen, um eine vorbestimmte Folge an Formen zu bilden.

## Revendications

1. Structure en nid d'abeilles (1) comprenant:
des parois de séparation poreuses (6) ayant un grand nombre d'alvéoles et disposées de manière à former une pluralité de cellules (5) fonctionnant comme passages d'écoulement des gaz d'échappement entre deux faces d'extrémité, et
des premières portions bouchées (7) disposées de manière à boucher alternativement l'une quelconque des portions d'extrémité ouverture des cellules (5) sur les deux faces d'extrémité,
et ayant une constitution où des segments en nid d'abeilles (2) formés séparément ayant une forme d'une partie de la structure d'ensemble séparée en deux ou plusieurs dans un plan parallèle à un axe central sont joints par un matériau de jonction (9) pour former la structure d'ensemble;
où les segments en nid d'abeilles (2) comprennent au moins un segment spécifique (2X) ayant des spécificités différentes de celles de segments généraux autres que le ou les segments spécifiques, et
où des deuxièmes portions bouchées additionnelles (8) sont disposées dans les portions d'extrémité d'ouverture n'ayant pas ladite première portion bouchée (7) d'une pluralité de cellules du segment spécifique pour former des cellules (5C) bouchées dans les deux portions d'extrémité d'ouverture sur un côté de face d'extrémité et la portion d'extrémité d'ouverture sur l'autre côté de face d'extrémité de manière à supprimer l'écoulement d'au moins une partie des gaz d'échappement dans ces cellules,
et où la structure d'ensemble est formée dans laquelle les segments spécifiques 2X sont assemblés de manière à se localiser dans une portion centrale incluant l'axe central.

2. Structure en nid d'abeilles selon la revendication 1, dans laquelle le segment spécifique 2X présente un taux d'ouverture plus élevé qu'une spécificité différente des segments généraux (2).

3. Structure en nid d'abeilles selon la revendication 1, dans laquelle le segment spécifique 2X possède une porosité plus élevée en tant que spécificité différente des segments généraux (2).

4. Structure en nid d'abeilles selon la revendication 1, dans laquelle le segment spécifique 2X possède un plus grand volume (zone en section transversale prise le long d'un plan perpendiculaire à l'axe central) comme spécificité différente des segments généraux (2).

5. Structure en nid d'abeilles selon la revendication 1, dans laquelle le segment spécifique (2X) possède une conductivité thermique plus basse qu'une spécificité différente des segments généraux (2).

6. Structure en nid d'abeilles selon la revendication 1, dans laquelle un matériau pour les parois de séparation (6) des segments généraux (2) est en cordiérite, et dans laquelle le segment spécifique (2X) possède un matériau des parois de séparation en carbure de silicium (SiC) comme spécificité différente des segments généraux.

7. Structure en nid d'abeilles selon l'une quelconque des revendications 1 à 6, dans laquelle l'ensemble de la structure est formé dans laquelle les segments spécifiques (2X) sont assemblés de manière à se localiser dans une portion ayant la température la plus élevée lorsque les segments spécifiques sont chauffés par les gaz d'échappement.

8. Structure en nid d'abeilles selon l'une quelconque des revendications 1 à 7, dans laquelle des formes en section transversale prises le long d'un plan perpendiculaire à l'axe central des portions bouchées additionnelles se suivent mutuellement pour former une série de formes prédéterminées.
